# EUROPÄISCHE PATENTSCHRIFT

(11) **EP 0 573 950 B1**
(45) Veröffentlichungstag und Bekanntmachung des Hinweises auf die Patenterteilung: **11.12.1996**
(21) Anmeldenummer: 93109169.8
(22) Anmeldetag: 08.06.1993
(51) Int. Cl.: G01B 11/30, G01B 5/00

(54) **Vorrichtung zur winkelauflösenden optischen Untersuchung einer Probe**
Apparatus for the angular resolving optical inspection of a sample
Appareil d'examen optique à résolution d'angle d'un échantillon

(30) Priorität: 10.06.1992 DE 4218984
(43) Veröffentlichungstag der Anmeldung: 15.12.1993
(73) Patentinhaber: CARL ZEISS JENA GmbH, D-07745 Jena (DE)
(72) Erfinder: Rudolph, Günter, D-6900 Jena (DE)
(74) Vertreter: Rackette, Karl, Dipl.-Phys. Dr.-Ing

(56) Entgegenhaltungen:
- US-A- 4 390 277
- JOURNAL OF PHYSICAL CHEMISTRY, Bd. 92, Nr. 23, 17. November 1988, US, Seiten 6723-6725; H.O. MOSER et al.: 'Multichannel time-resolved light scattering from ordered colloidal suspensions'

## Beschreibung

Die Erfindung betrifft eine Vorrichtung zur winkelauflösenden optischen Untersuchung einer Probe mit einem Probenhalter, der mit Hilfe einer Positioniereinrichtung in eine vorherbestimmte Position und Winkellage relativ zum Strahlengang einer einen Abtaststrahl erzeugenden Lichtquelle überführbar ist, und mit einem das von der Probe wieder abgegebene Licht des Abtaststrahles aufnehmenden Meßkopf, der auf einem in Bezug auf den Probenhalter in eine Vielzahl von Winkelstellungen verschwenkbaren Ausleger angeordnet ist und dessen Ausgangssignal eine Auswerte- und Steuereinrichtung speist.

Eine solche Vorrichtung ist in einem Prospekt der Firma Huber-Diffraktionstechnik GmbH beschrieben, in dem ein solches Gerät unter der Bezeichnung System 10020 dargestellt ist.

Optische Prüfungsmethoden sind nicht nur bei der Prüfung optischer Bauelemente von Interesse, sondern gestatten auch berührungsfrei und schnell Materialeigenschaften, zum Beispiel Oberflächenrauheitsgrößen, zu bestimmen, ohne dabei unerwünschte mechanische Wechselwirkungen mit der Probe zu verursachen. Eine Oberflächeninspektion durch eine winkelaufgelöste Streulichtmessung wird aber nicht nur verwendet, um die Rauheit der zu untersuchenden Oberfläche einer Probe festzustellen, sondern solche Verfahren gestatten es beispielsweise auch, Staubablagerungen auf einer Glasscheibe zu messen, die zur Luftüberwachung von Reinsträumen verwendet wird.

Für mehrdimensionale winkelaufgelöste Streulichtmessungen sind Streulicht-Goniometer bekannt, bei denen zum Auswählen des Meßortes sowie Ausrichten der Probe relativ zu einem Beleuchtungsstrahlengang und zu einem Meßkopf eine Positionierung der Probe in bis zu sechs Freiheitsgraden mit Hilfe einer Kombination aus Linearschlitten und Goniometern erfolgt, wie es in der Firmenschrift der TMA Technologies Inc, Montana, USA, beschrieben ist.

Auch bei einem von der Firma Huber-Diffraktionstechnik GmbH unter der Bezeichnung System 10020 vertriebenen winkelauflösenden Laser-Streulichtmeßgerät sind mehrere Linearschlitten und Goniometer vorgesehen, um die relative Lage der Probe zum Strahlengang zu verändern. Da die Position der Probe von den mechanischen Einstellungen entlang der X-Achse, der Y-Achse und der Z-Achse abhängt, addieren sich die Fehler der jeweils verwendeten Mechaniken. Beim vollständigen Ausfahren der Linearschlitten ergeben sich verhältnismäßig lange Hebelarme und aus diesem Grund schwere und instabile Anordnungen, bei denen sich die Verformungen und das Spiel der einzelnen Linearschlitten und Kippelemente kumulieren.

Neben dieser Fehlerkumulation ergeben sich bei größeren Stellbereichen aufgrund der Baugröße der einzelnen Komponenten sehr sperrige, große und schwere Konstruktionen, die sich nur schlecht, in Extremfällen nicht, in einem koaxialen Aufbau von Probenhalterung und Meßkopfschwenkarm integrieren lassen. Zusätzliche Schwierigkeiten bereiten die bei elektrisch angetriebenen Komponenten anfallenden Kabel für Antriebe und Meßsysteme, deren zuverlässige Führung aufgrund der Relativbewegungen von Meßkopfschwenkarm und Probenhalterung zueinander sowie zur Montagefläche nur mit hohem Aufwand möglich ist. Die je nach aktueller Probenpositionierung variablen äußeren Begrenzungen einer Schlittenkombination erschweren die Festlegung von Kollisionsbereichen zwischen Meßkopfschwenkarm und Probenpositionierung erheblich. Dies gilt insbesondere bei mehrdimensionalen Streulicht-Goniometern.

Moser et al. beschreibt in dem Artikel "Multichannel Time-Resolved Light Scattering from Ordered Colloidal Suspensions" in Journal of Physical Chemistry, vol 92, No. 23, 1988, S. 6723 - 25, einen fiberoptischen Sensor, mit dem durch die entsprechende halbraumförmige Anordnung von Licht aufnehmenden und zu einer CCD-Kamera führenden Glasfasern eine Winkelauflösung von kleiner 1° in einer kürzeren Zeit als 10 Millisekunden ermöglicht wird. Zur Einstellung der Probe wird ein konventioneller Verschiebetisch eingesetzt.

Schließlich beschreibt die US 4,390,277 eine Vorrichtung zur Untersuchung der Krümmung von reflektierenden Flächen, wobei diese Flächen mit ihrer stützenden Unterlage auf Tragarmen aufgesetzt werden, die auf Schienen befestigt sind. Mit den in Bezug auf die Unterlage und die Schienen einstellbaren Tragarmen ist die zu untersuchende reflektierende Fläche ausrichtbar.

Ausgehend von diesem Stand der Technik liegt der Erfindung die Aufgabe zugrunde, eine Vorrichtung zur winkelauflösenden optischen Untersuchung einer Probe zu schaffen, die sich durch eine hohe Genauigkeit und Präzision für die Position und Winkellage des Probenhalters auszeichnet.

Diese Aufgabe wird erfindungsgemäß dadurch gelöst, daß der Probenhalter mit einem Zwischenteil versehen ist, das über sechs längenverstellbare Hubsäulen, die an ihren beiden Anschlußenden jeweils über ein zwei Freiheitsgrade aufweisendes Gelenk verfügen, mit einem Hauptträgerteil verbunden ist, daß am Zwischenteil und am Hauptträgerteil jeweils drei im Abstand voneinander liegende Befestigungsbereiche für jeweils zwei Gelenke vorhanden sind, daß die beiden einem jeden Befestigungsbereich des Zwischenteils zugeordneten Hubsäulen sich jeweils bis zu den am nächsten liegenden Befestigungsbereichen auf dem Hauptträgerteil erstrecken und daß jede Hubsäule eine Einrichtung zum Erfassen einer die Referenzlage des Probenhalters in Bezug auf den Strahlengang zwischen der Lichtquelle und dem Meßkopf definierenden Referenzlänge aufweist, die mit Dateneingängen der Auswerte- und Steuereinrichtung verbunden sind, durch die die einer gewünschten Position und Winkellage des Probenhalters entsprechenden Steuersignale für die Hubsäulen erzeugbar sind.

Dadurch, daß der Probenhalter statt über eine mehrstufige Anordnung jeweils aufeinander befestigter Linearschlitten über sechs nebeneinander angeordnete längenverstellbare Hubsäulen direkt mit dem Hauptträgerteil verbunden ist, ist die Genauigkeit der Vorrichtung durch die Präzision der einzelnen Hubsäulen bestimmt, deren Ungenauigkeiten sich jedoch nicht addieren oder kumulieren, wie dies bei Linearschlitten der Fall ist, die jeweils bereits auf einem anderen Linearschlitten befestigt sind.

Die getroffene Anordnung hat darüber hinaus den Vorteil, daß sie formstabiler ist und insbesondere die bei weit ausgefahrenen Linearschlitten auftretenden Verformungen bei schweren Proben vermeidet. Die erfindungsgemäße Vorrichtung ist gegenüber bekannten Vorrichtungen mit mehreren aufeinandergestapelten Linearschlitten auch bei großen Stellwegen in ihrer Kompaktheit deutlich verbessert und verfügt über einen wesentlich leichteren und steiferen Aufbau. Ein weiterer Vorteil besteht darin, daß Verschiebungen auf einer Grundfläche vermieden werden und eine problemlose Verlegung von Kabeln und Leitungen für Antriebe und Meßsysteme ermöglicht wird. Infolge des Wegfalls der weit ausladenden Linearschlitten und der gegebenenfalls erforderlich werdenden Gegengewichte, ergibt sich für das erfindungsgemäße optische Prüfgerät auch ein gefälligeres Aussehen und die Möglichkeit, auf einfache Weise feste Kollisionsbereiche zu bestimmen, bei denen die Gefahr eines Zusammenstoßes verschiedener Bauteile des Prüfgerätes besteht.

Bei einem bevorzugten Ausführungsbeispiel der Erfindung sind die Hubsäulen als Hubspindelsäulen mit einem Rollgewindetrieb und einem Schrittmotor ausgebildet, die von einem Mikrocomputer in der Auswerte- und Steuereinrichtung in einer Weise gesteuert werden, daß durch Verändern der Längen der Hubsäulen die jeweils gewünschte Position und Winkellage der Probe erreicht wird. Mit den sechs längenverstellbaren Hubsäulen läßt sich dabei eine Translation entlang dreier kartesischer Koordinaten sowie eine Rotation um die drei kartesischen Koordinaten erreichen. Die dabei maximal möglichen Koordinaten sind voneinander abhängig, wobei jedoch große Koordinaten im Gegensatz zu einer Anordnung mit einer Kombination von Linearschlitten nicht mit größer werdenden Fehlern und Instabilitäten verbunden sind.

Die Einrichtung zum Erfassen der Referenzlage des Probenhalters läßt sich einfach durch je einen Referenzschalter pro Hubspindelsäule realisieren, der beim Erreichen der Referenzlage des Probenhalters einen Kontakt schaltet. Auf diese Weise läßt sich mit einfachen Mitteln eine Genauigkeit von etwa 1 Mikrometer für die Referenzlage erreichen, die als Bezugslage zur Berechnung der Lage und Orientierung des Zwischenteils beziehungsweise des Probenhalters dient.

Die einen Mikrocomputer enthaltende Auswerte- und Steuereinrichtung verfügt zur Dateneingabe und zur Auswahl der bei einem Prüfablauf anzufahrenden Strahlengänge über eine Tastatur und/oder Maus sowie zur Datenausgabe über einen Monitor und/oder Drucker zusätzlich zur Datenausgabe an die Schrittmotoren der Hubsäulen sowie der Einstellorgane des Meßkopfes und der Lichtquelle. Die Lichtquelle zur Erzeugung des Abtaststrahles besteht vorzugsweise aus einem HeNe-Laser, der mit Hilfe der Auswerte- und Steuereinrichtung sowie einer Chopperelektronik beeinflußbar ist.

Die drei Befestigungsbereiche auf dem Zwischenteil und dem Hauptträgerteil spannen vorzugsweise jeweils ein gleichseitiges Dreieck auf, wobei im einfachsten Fall die Größe der aufgespannten gleichseitigen Dreiecke am Zwischenteil und Hauptträgerteil gleich sind. Wenn die Befestigungsbereiche auf dem Zwischenteil einen geringeren Abstand voneinander einnehmen, lassen sich größere Kippwinkel erreichen. Vergrößert man die Abstände der Befestigungsbereiche, sind die einem Schritt des Schrittmotors zugeordneten Winkeländerungen kleiner.

Vorzugsweise wird die Vorrichtung beim Zusammenbau so justiert, daß bei Erreichen der Referenzlage des Probenhalters die durch die Befestigungsbereiche des Zwischenteils und des Hauptträgerteils definierten Dreiecke sich parallel zueinander und mit ihren Mittelpunkten entlang der Drehachse des Auslegers über den Meßkopf erstrecken.

Es ist zweckmäßig, die Anordnung so zu treffen, daß die durch die Befestigungsbereiche des Zwischenstücks und des Hauptträgerteils definierten Dreiecke bei Erreichen der Referenz lage des Probenhalters um 60 Grad gegeneinander verdreht sind.

Bei einem bevorzugten Ausführungsbeispiel ist der Ausleger für den Meßkopf auf der ersten Welle und der Hauptträgerteil auf der zweiten Welle eines Doppel-Goniometers angeordnet. Auf diese Weise können besonders große Winkelbereiche bei feststehender Lichtquelle erzielt werden.

Besonders kleine Veränderungen der Position und/oder Winkellage der Probe lassen sich erreichen, wenn die Hubsäulen ausschließlich oder zusätzlich in Kombination mit einem Spindelantrieb ein hydraulisches Mikropositioniersystem oder einen Piezoantrieb enthalten.

Nachfolgend wird ein Ausführungsbeispiel der Erfindung anhand der Zeichnung näher beschrieben. Es zeigen:
- Fig. 1: eine perspektivische Ansicht einer Vorrichtung zur winkelauflösenden optischen Untersuchung einer Probe ohne eine vorzugsweise eingesetzte Laserlichtquelle und ohne die über eine Reihe von elektrischen Leitungen mit der Vorrichtung und der Laserlichtquelle verbundene elektronische Auswerte- und Steuereinrichtung, die als Auswerte- und Steuerrechner einen Personalcomputer oder Mikrocomputer enthält, und
- Fig. 2: eine vergrößerte Darstellung der mechanischen Bauteile der Positioniereinrichtung in perspektivischer Ansicht.

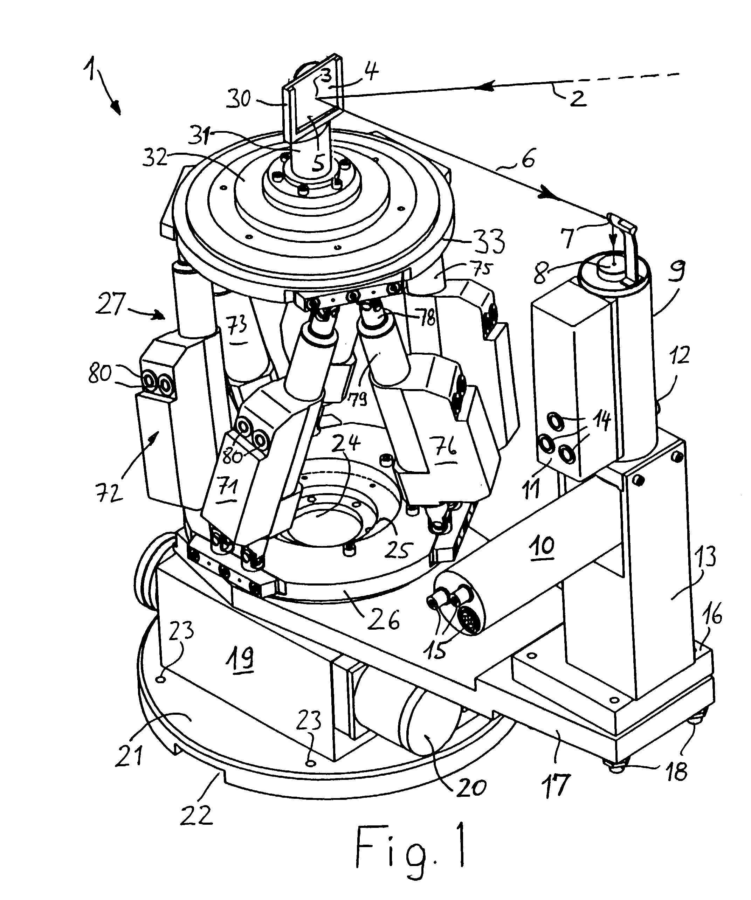

Die in Fig. 1 perspektivisch dargestellte optische Prüfvorrichtung 1 ist über in der Zeichnung nicht dargestellte Kabel mit einer Auswerte- und Steuereinrichtung verbunden, die einen Auswerte- und Steuerrechner zur Steuerung des gesamten Prüfvorganges enthält. Die optische Prüfvorrichtung 1 wird mit dem Licht einer in der Zeichnung ebenfalls nicht dargestellten Lichtquelle gespeist, mit deren Hilfe der Abtaststrahl 2 erzeugt wird. Die Lichtquelle verfügt vorzugsweise über einen HeNe-Laser mit einer Wellenlänge von 632,8 nm. Weiterhin enthält die Lichtquelle einen Chopper, ein fokussierbares Teleskop, eine Referenzdiode, eine Sicherheitsblende, Umlenkspiegel und Strahlformungselemente. Die Lichtquelle wird ebenfalls über die Auswerte- und Steuereinrichtung gesteuert und überwacht.

Der Abtaststrahl 2 wird am Meßort 3 auf der Oberfläche 4 einer Probe 5 reflektiert und/oder gestreut, wobei je nach den vorliegenden Verhältnissen ein aus einem direkten Reflex oder Streulicht bestehender Meßstrahl 6 nach Umlenkung über einen Einkoppelspiegel 7 durch eine Blende 8 in einen Meßkopf 9 gelangt. Der Meßkopf 9 enthält diverse feinmechanische und optische Teile, über die das Licht des Meßstrahls 6 abgeblendet und gefiltert zu einem Seitenfenster-Sekundärelektronenvervielfacher 10 gelangt, der unter anderem über einen Lock-in-Verstärker verfügt.

Dem Meßkopf 9 ist ein Motorgehäuse 11 zugeordnet, das zur Aufnahme eines Schrittmotors zum Verstellen eines Polarisationsfilters und zur Steuerung von drei Graufilterantrieben dient. Durch Einsatz verschiedener Filter gestattet der Meßkopf 9 die Verarbeitung eines Dynamikbereiches von zwölf Größenordnungen.

Am in Fig. 1 unteren Ende des Meßkopfes 9 erkennt man einen Einsatz 12 für eine Hilfsblende im Strahlengang zum Sekundärelektronenvervielfacher 10. Der Sekundärelektronenvervielfacher 10 und der Meßkopf 9 enthalten eine Reihe von elektrischen Steckanschlüssen 14 und 15 zur elektrischen Verbindung mit der in der Zeichnung nicht dargestellten Auswerte- und Steuereinrichtung. Die Steckanschlüsse 14 enthalten insbesondere die Steueranschlüsse und Stromversorgungsanschlüsse für den Schrittmotor und die Filtersteuerung des Meßkopfes 9. Die elektrischen Steckanschlüsse 15 gestatten das Anschließen von Signalleitungen, Steuerspannungen und der Hochspannung zum Betrieb des Sekundärelektronenvervielfachers. Der Meßkopf 9 und der Sekundärelektronenvervielfacher 10 sind an einem Meßkopfträger 13 befestigt, der seinerseits über eine Zwischenplatte 16 mit einem verschwenkbaren Ausleger 17 justierbar verbunden ist. Zum Justieren der Orientierung und Neigung des Meßkopfes 9 sind in Fig. 1 erkennbare Justierschrauben 18 vorgesehen.

Der verschwenkbare Ausleger 17 ist mit einer in Fig. 1 nicht erkennbaren äußeren Hohlwelle eines Doppel-Goniometers 19 verbunden, mit dessen Hilfe es möglich ist, den Ausleger 17 und damit den Meßkopf 9 entlang einer horizontal verlaufenden Meßebene um die Probe 5 zu verschwenken. Die äußere Hohlwelle des Doppel-Goniometers 19 ist einem ersten Stellmotor 20 zugeordnet, der über in der Zeichnung nicht dargestellte Leitungen mit Strom versorgt wird.

Das Doppel-Goniometer 19 ruht auf einer scheibenförmig ausgebildeten Grundplatte 21, die mit einer Führungsnut 22 und Befestigungslöchern 23 versehen sein kann.

Konzentrisch zur äußeren Hohlwelle für den verschwenkbaren Ausleger 17 verfügt das Doppel-Goniometer 19 über eine innere Hohlwelle 24, deren freier Innenraum zum Durchführen der verschiedenen Anschlußkabel dient. Die innere Hohlwelle 24 ist mit einem Montageflansch 25 verbunden, auf dem ein unterer Ring 26 als Hauptträgerteil einer Positioniereinrichtung 27 befestigt ist.

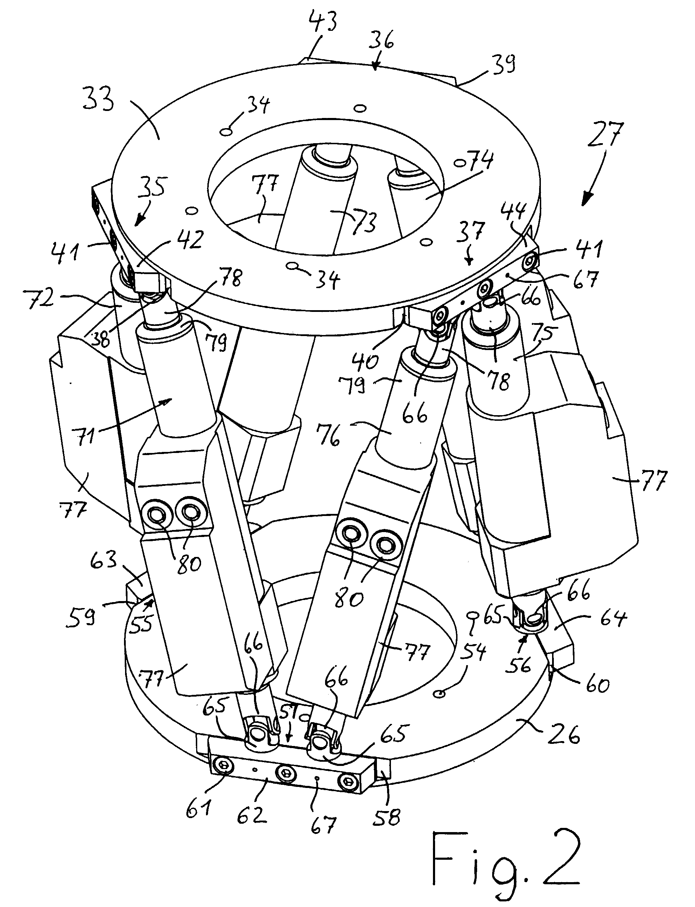

Die wesentlichen mechanischen Teile der Positioniereinrichtung 27 sind in Fig. 2 gesondert und vergrößert dargestellt. Mit Hilfe eines zweiten in der Zeichnung nicht dargestellten Stellmotors kann der untere Ring 26 der Positioniervorrichtung 27 verdreht werden, um die Positioniereinrichtung 27 und damit die Probe 5 insgesamt um die Hochachse der optischen Prüfvorrichtung 1 zu verdrehen. Eine derartige Drehbewegung kann aber auch mit Hilfe der Positioniervorrichtung 27 erreicht werden, die darüber hinaus drei translatorische und drei rotatorische Bewegungen, d.h. Stellbewegungen mit sechs Freiheitsgraden durchzuführen gestattet.

Wie man in Fig. 1 erkennt, ist die als Planscheibe ausgebildete Probe 5 in einem Probenhalter 30 eingeschoben, der über einen kurzen Zapfen 31 und eine Montageflanschanordnung 32 konzentrisch auf einem als Zwischenteil dienenden oberen Ring 33 befestigt ist, der sowohl in Fig. 1 als auch in Fig. 2 zu erkennen ist.

Der obere Ring 33 verfügt über mehrere Befestigungslöcher 34 sowie drei Befestigungsbereiche 35, 36 und 37. Die Befestigungsbereiche 35, 36 und 37 sind jeweils um 120 Grad versetzt angeordnet. An den Befestigungsbereichen 35, 36, 37 sind im oberen Ring 33 jeweils entlang einer Sehne Ausnehmungen 38, 39, 40 vorgesehen. Den Ausnehmungen 38, 39, 40 sind jeweils mit Hilfe von Schrauben 41 befestigte Klemmbacken 42, 43 und 44 zugeordnet.

Der in Fig. 2 gegenüber Fig. 1 vergrößert dargestellte untere Ring 26 verfügt ebenfalls über eine Reihe von Befestigungslöchern 54 und drei Befestigungsbereiche 55, 56 und 57, die jeweils um 120 Grad gegeneinander versetzt angeordnet sind. Entsprechend den Ausnehmungen 38 bis 40 des oberen Rings 33 sind Ausnehmungen 58, 59 und 60 auch im unteren Ring 26 vorgesehen, auf denen mit Hilfe von Schrauben 61 Klemmbacken 62, 63 und 64 befestigt sind.

In den Befestigungsbereichen 35 bis 37 und 55 bis 57 sowie den Klemmbacken 42 bis 44 und 62 bis 64 sind jeweils ein Paar Bohrungen zum Einsetzen des Anschlußzapfens 65 von Kardangelenken 66 vorgesehen. Wenn die Anschlußzapfen 65 nach dem Einjustieren der Positioniervorrichtung 27 die gewünschte Lage eingenommen haben, werden zur Sicherung dieser Lage nicht nur die Schrauben 41 und 61 angezogen, sondern zusätzlich Arretierungsstifte 67 durch die Klemmbacken 42 bis 44, 62 bis 64 und die Anschlußzapfen 65 eingetrieben. Auf diese Weise ergibt sich ein dauerhafter präziser Sitz der Kardangelenke 66 auf dem unteren Ring 26 und dem oberen Ring 33.

Der Zusammenbau der in Fig. 2 dargestellten Teile der Positioniervorrichtung 27 erfolgt mit Hilfe eines in der Zeichnung nicht dargestellten Positionierzylinders, der nach dem Zusammenbau der Positioniervorrichtung 27 wieder entfernt wird und der es gestattet, den unteren Ring 26 und den oberen Ring 33 genau fluchtend und bei einer Verdrehung von 60 Grad genau parallel zu halten, bis die Kardangelenke 66 und die Arretierungsstifte 67 dauerhaft mit den Ringen 26, 33 befestigt sind.

Wie man in den Fig. 1 und 2 erkennt, erstrecken sich zwischen dem unteren Ring 26 und dem oberen Ring 33 sechs Hubspindelsäulen 71, 72, 73, 74, 75 und 76. Die Hubspindelsäulen 71 bis 76 sind jeweils über Kardangelenke 66 mit dem unteren Ring 26 und dem oberen Ring 33 verbunden, so daß wegen des Fehlens einer Drehsperre in den Hubspindelsäulen 71 bis 76 in Abhängigkeit von den jeweils eingestellten Längen der Hubspindelsäulen 71 bis 76 Bewegungen des oberen Rings 33 mit sechs Freiheitsgraden ausführbar sind. Die Hubsäulen 75 und 76 verbinden den Befestigungsbereich 37 des oberen Rings 33 mit den beiden darunter und am nächsten liegenden Befestigungsbereichen 56 und 57. In entsprechender Weise verbinden die Hubspindelsäulen 71 und 72 den Befestigungsbereich 35 mit den Befestigungsbereichen 55 und 57. Schließlich verbinden die Hubspindelsäulen 73 und 74 den Befestigungsbereich 36 des oberen Rings 33 mit den Befestigungsbereichen 55 und 56 des unteren Rings 26.

Jede Hubspindelsäule 71 bis 76 enthält in einem Motorgehäuse 77 einen Schrittmotor und ein Getriebe zum Antrieb der Hubspindel. Je nach der Drehrichtung und der Zahl der Schritte des Schrittmotors können somit die Hubspindelstangen 78 mehr oder weniger weit aus der Hubspindel 79 ausgefahren werden. Jeder Lage und Orientierung des oberen Rings 33 sind somit eindeutig sechs Ausfahrlängen der sechs Hubspindelstangen 78 der Hubspindelsäulen 71 bis 76 zugeordnet. Jede Hubspindelsäule 71 bis 76 verfügt über Anschlußbuchsen 80 zum Anschluß von Versorgungs- und Steuerspannungen sowie zum Verbinden von Referenzschaltern und Endschaltern, die in den Hubspindelsäulen 71 bis 76 vorgesehen sind.

Jede Hubspindelsäule 71 bis 76 verfügt über einen Referenzschalter, der beim Erreichen der kürzesten Länge der Hubspindelstange 78 schaltet. Da dieses Schalten mit einer Präzision von 1 Mikrometer erfolgt, ist es dank des Referenzschalters möglich, die Referenzlage der Hubspindeln 79 auf 1 Mikrometer genau vorzusehen. Hierzu werden die Hubspindelstangen 78 beim Einbau durch manuelles Verdrehen bei Anwesenheit der oben erwähnten Montagehilfe auf eine Länge eingestellt, bei der die Referenzschalter jeweils den Referenzkontakt lösen oder öffnen. Das jeweils zugeordnete Kardangelenk 66 wird dann in genau dieser Referenzstellung mit Hilfe der jeweiligen Klemmbacken 42 bis 44 bei bereits festgezogenen Klemmbacken 62 bis 64 angezogen. Eine dabei erfolgte Verdrehung der einzelnen Kardangelenke 66 ist nicht störend, da diese aufgrund der beiden Freiheitsgrade nicht notwendigerweise mit ihren Drehzapfen eine bestimmte Orientierung annehmen müssen.

Wenn sämtliche Hubspindelsäulen 71 bis 76 durch externes Verdrehen der Hubspindelstangen 78 justiert worden sind und die zugeordneten Kardangelenke 66 mit Hilfe der Arretierungsstifte 67 dauerhaft gesichert sind, wird die oben erwähnte Montagehilfe entfernt. Auf diese Weise ist gewährleistet, daß die Referenzlage oder Ausgangslage des oberen Rings 33 und des unteren Rings 26 genau koaxial und genau parallel eingestellt ist und nunmehr mit Hilfe des Rechners der Auswerte- und Steuereinrichtung für jede gewünschte Lage und Orientierung des oberen Rings 33 und der Probe 5 die erforderlichen Längenveränderungen der Hubspindelsäulen 71 bis 76 berechnet und durch Einschalten der Schrittmotore in den Motorgehäusen 77 angefahren werden können.

Die Auswerte- und Steuereinrichtung berechnet für jede gewünschte Lage und Orientierung zunächst, ob diese innerhalb der möglichen Verfahrenswege der Hubspindelstangen 78 liegt oder nicht. Falls dies der Fall ist, werden die entsprechenden Signale an die Schrittmotore abgegeben, ansonsten erfolgt eine entsprechende Fehlermeldung an den Benutzer der optischen Prüfvorrichtung 1.

## Patentansprüche

1. Vorrichtung zur winkelauflösenden optischen Untersuchung einer Probe (5) mit einem Probenhalter (30), der mit Hilfe einer Positioniereinrichtung (27) in eine vorherbestimmte Position und Winkellage relativ zum Strahlengang (2, 6) einer einen Abtaststrahl erzeugenden Lichtquelle überführbar ist, und mit einem das von der Probe (5) wieder abgegebene Licht (6) des Abtaststrahles (2) aufnehmenden Meßkopf (9), der auf einem in Bezug auf den Probenhalter (30) in eine Vielzahl von Winkelstellungen verschwenkbaren Ausleger (17) angeordnet ist und dessen Ausgangssignal eine Auswerte- und Steuereinrichtung speist, **dadurch gekennzeichnet,** daß der Probenhalter (30) mit einem Zwischenteil (33) versehen ist, das über sechs längenverstellbare Hubsäulen (71 bis 76), die an ihren beiden Anschlußenden jeweils über ein zwei Freiheitsgrade aufweisendes Gelenk (66) verfügen, mit einem Hauptträgerteil (26) verbunden ist, daß am Zwischenteil (33) und am Hauptträgerteil (26) jeweils drei im Abstand voneinander liegende Befestigungsbereiche (35 bis 37, 55 bis 57) für jeweils zwei Gelenke (66) vorhanden sind, daß die beiden einem jeden Befestigungsbereich (35 bis 37) des Zwischenteils (33) zugeordneten Hubsäulen (71 bis 76) sich jeweils bis zu den am nächsten liegenden Befestigungsbereichen (55 bis 57) auf dem Hauptträgerteil (26) erstrecken, und daß jede Hubsäule (71 bis 76) eine Einrichtung zum Erfassen einer die Referenzlage des Probenhalters (30) in Bezug auf den Strahlengang (2, 6) zwischen der Lichtquelle und dem Meßkopf (9) definierenden Referenzlänge aufweist, die mit Dateneingängen der Auswerte- und Steuereinrichtung verbunden sind, durch die die einer gewünschten Position und Winkellage des Probenhalters (30) entsprechenden Steuersignale für die Hubsäulen (71 bis 76) erzeugbar sind.

2. Vorrichtung nach Anspruch 1, dadurch gekennzeichnet, daß die Hubsäulen als Hubspindelsäulen (71 bis 76) mit einem Rollgewindetrieb und einem Schrittmotor ausgebildet sind.

3. Vorrichtung nach Anspruch 1 oder 2, dadurch gekennzeichnet, daß die Einrichtung zum Erfassen der Referenzlage des Probenhalters (30) ein Referenzschalter ist, der beim Erreichen der Referenzlage des Probenhalters (30) schaltet.

4. Vorrichtung nach einem der vorstehenden Ansprüche, dadurch gekennzeichnet, daß die Auswerte- und Steuereinrichtung zur Dateneingabe und Auswahl des Prüfablaufs eine Tastatur und/oder Maus und zur Datenausgabe einen Monitor und/oder Drucker aufweist.

5. Vorrichtung nach einem der vorstehenden Ansprüche, dadurch gekennzeichnet, daß die Lichtquelle zur Erzeugung des Abtaststrahles (2) einen HeNe-Laser enthält, der mit Hilfe der Auswerte- und Steuereinrichtung sowie einer Chopperelektronik beeinflußbar ist.

6. Vorrichtung nach Anspruch 1, dadurch gekennzeichnet, daß die drei Befestigungsbereiche (35 bis 37, 55 bis 57) auf dem Zwischenteil (33) und auf dem Hauptträgerteil (26) jeweils ein gleichseitiges Dreieck aufspannen.

7. Vorrichtung nach Anspruch 1 oder 6, dadurch gekennzeichnet, daß bei Erreichen der Referenzlage des Probenhalters (30) die durch die drei Befestigungsbereiche (35 bis 37, 55 bis 57) des Zwischenteils (33) und des Hauptträgerteils (26) definierten Dreiecke sich parallel zueinander und mit ihren Mittelpunkten entlang der Drehachse des Auslegers (17) für den Meßkopf (9) erstrecken.

8. Vorrichtung nach Anspruch 6 oder 7, dadurch gekennzeichnet, daß die durch die Befestigungsbereiche (35 bis 37, 55 bis 57) des Zwischenstücks (33) und des Hauptträgerteils (26) definierten Dreiecke bei Erreichen der Referenzlage des Probenhalters (30) um 60 Grad gegeneinander verdreht sind.

9. Vorrichtung nach einem der vorstehenden Ansprüche, dadurch gekennzeichnet, daß der Ausleger (17) für den Meßkopf (9) auf der ersten Welle und der Hauptträgerteil (26) auf der zweiten Welle eines Doppel-Goniometers (19) angeordnet sind.

10. Vorrichtung nach Anspruch 1, dadurch gekennzeichnet, daß die Hubsäulen (71 bis 76) ausschließlich oder zusätzlich in Kombination mit einem Spindelantrieb ein hydraulisches Mikropositioniersystem oder einen Piezoantrieb enthalten.

## Claims

1. An apparatus for the angle-resolving optical inspection of a sample (5) comprising a sample holder (30) which by means of a positioning device (27) can be transferred into a predetermined position and angular location relative to the beam path (2, 6) of a light source producing a scanning beam, and a measuring head (9) which receives the light (6) of the scanning beam (2), which is emitted again by the sample (5), the measuring head being arranged on a cantilever arm (17) which is pivotable in relation to the sample holder (30) into a plurality of angular positions, the output signal of the measuring head feeding an evaluation and control device, characterised in that the sample holder (30) is provided with an intermediate portion (33) which is connected to a main carrier portion (26) by way of six adjustable-length lift columns (71 to 76) which at their two connecting ends each have a respective joint (66) having two degrees of freedom, that provided on each of the intermediate portion (33) and the main carrier portion (26) are three spaced-apart fixing regions (35 to 37, 55 to 57) for two respective joints (66), that the two lift columns (71 to 76) associated with each fixing region (35 to 37) of the intermediate portion (33) each extend as far as the most closely adjacent fixing region (55 to 57) on the main carrier portion (26), and that each lift column (71 to 76) has a device for detecting a reference length which defines the reference position of the sample holder (30) in relation to the beam path (2, 6) between the light source and the measuring head (9), which devices are connected to data inputs of the evaluation and control device by which the control signals for the lift columns (71 to 76), corresponding to a desired position and angular location of the sample holder (30), can be produced.

2. An apparatus according to claim 1 characterised in that the lift columns are in the form of lift spindle columns (71 to 76) with a roller screwthread drive and a stepping motor.

3. An apparatus according to claim 1 or claim 2 characterised in that the device for detecting the reference position of the sample holder (30) is a reference switch which switches upon attainment of the reference position of the sample holder (30).

4. An apparatus according to one of the preceding claims characterised in that the evaluation and control device has a keyboard and/or mouse for data input and selection of the test procedure and a monitor and/or a printer for data output.

5. An apparatus according to one of the preceding claims characterised in that the light source for producing the scanning beam (2) includes an HeNe-laser which can be influenced by means of the evaluation and control device and an electronic chopper means.

6. An apparatus according to claim 1 characterised in that the three fixing regions (35 to 37, 55 to 57) on the intermediate portion (33) and on the main carrier portion (26) respectively define an equilateral triangle.

7. An apparatus according to claim 1 or claim 6 characterised in that upon attainment of the reference position of the sample holder (30) the triangles defined by the three fixing regions (35 to 37, 55 to 57) of the intermediate portion (33) and the main carrier portion (26) extend in mutually parallel relationship and with their centre points along the axis of rotation of the cantilever arm (17) for the measuring head (9).

8. An apparatus according to claim 6 or claim 7 characterised in that the triangles defined by the fixing regions (35 to 37, 55 to 57) of the intermediate portion (33) and the main carrier portion (26) are turned through 60° relative to each other upon attainment of the reference position of the sample holder (30).

9. An apparatus according to one of the preceding claims characterised in that the cantilever arm (17) for the measuring head (9) is arranged on the first shaft of a double goniometer (19) and the main carrier portion (26) is arranged on the second shaft of the double goniometer (19).

10. An apparatus according to claim 1 characterised in that the lift columns (71 to 76) include exclusively or additionally in combination with a spindle drive a hydraulic micropositioning system or a piezoelectric drive.

## Revendications

1. Dispositif d'analyse optique d'un échantillon par dissolution angulaire (5) à l'aide d'un support d'échantillon (30) pouvant être transféré, par un dispositif de positionnement (25), dans une position angulaire préalablement définie par rapport au faisceau de rayons (2, 6) d'une source lumineuse générant un faisceau de balayage, et un capteur (9) captant la lumière (6) du faisceau de balayage (2) réfléchi par l'échantillon (5), ledit capteur étant disposé sur un bras (17) pouvant pivoter pour prendre une position parmi un grand nombre de positions angulaires par rapport au support d'échantillon (30) et le signal de sortie dudit capteur alimentant une unité d'exploitation et de commande, **caractérisé en ce que** le support d'échantillon (30) est muni d'une pièce intermédiaire (33) reliée à une pièce de support principal (26) par 6 colonnes de levage (71 à 76) réglables en longueur disposant chacune, à ses deux extrémités de raccordement d'une articulation (66) présentant deux degrés de liberté, en ce que trois zones de fixation (35 à 37, 55 à 57) dont chacune est attribuée à deux articulations (66) sont prévues sur la pièce intermédiaire (33) et sur la pièce de support principal (26), ces zones étant disposées à un certain écart les unes par rapport aux autres, en ce que deux des colonnes de levage (71 à 76) associées à chaque zone de fixation (35 à 37) de la pièce intermédiaire (33) s'orientent jusqu'aux zones de fixation (55 à 57) les plus proches de la pièce de support principal (26), et en ce que chaque colonne de levage (71 à 76) présente un dispositif de détection d'une longueur de référence définissant la position de référence du support d'échantillon (30) par rapport aux faisceaux (2, 6) entre la source de lumière et le capteur (9), lesdits dispositifs de détection étant reliés à des entrées de données de l'unité d'exploitation et de commande, cette dernière pouvant générer des signaux de commande transmis aux colonnes de levage (71 à 76) pour obtenir la position et l'angle souhaités du support d'échantillon.

2. Dispositif selon la revendication 1, caractérisé en ce que les colonnes de levage sont réalisées sous la forme de vis de levage (71 à 76) munies d'un engrenage roulant et d'un moteur pas-à-pas.

3. Dispositif selon la revendication 1 ou 2, caractérisé en ce que le dispositif de détection de la position de référence du support d'échantillon (30) est un commutateur de référence déclenché lorsque la position de référence du support d'échantillon (30) est atteinte.

4. Dispositif selon l'une quelconque des revendications précédentes, caractérisé en ce que l'unité d'exploitation et de commande comprend un clavier et/ou une souris pour entrer des données et pour sélectionner un cycle d'essai et un moniteur et/ou une imprimante pour sortir des données.

5. Dispositif selon l'une quelconque des revendications précédentes, caractérisé en ce que la source de lumière utilisée pour générer les rayons du faisceau de balayage (2) comprend un laser HeNe pouvant être orienté à l'aide de l'unité d'exploitation et de commande et à l'aide d'une électronique de vibreur.

6. Dispositif selon la revendication 1, caractérisé en ce que les trois zones de fixation (35 à 37, 55 à 57) permettent de fixer un triangle équilatéral sur la pièce intermédiaire (33) et sur la pièce de support principal (26).

7. Dispositif selon la revendication 1 ou 6, caractérisé en ce que les triangles définis par les trois zones de fixation (35 à 37, 55 à 57) de la pièce intermédiaire (33) et de la pièce de support principal (26) s'orientent parallèlement les uns par rapport aux autres et que leurs centres sont alignés sur l'axe de rotation du bras (17) du capteur (9) lorsque la position de référence du support d'échantillon (30) est atteinte.

8. Dispositif selon la revendication 6 ou 7, caractérisé en ce que les triangles définis par les trois zones de fixation (35 à 37, 55 à 57) de la pièce intermédiaire (33) et de la pièce de support principal (26) sont décalés de 60° les uns par rapport aux autres lorsque la position de référence du support d'échantillon (30) est atteinte.

9. Dispositif selon l'une quelconque des revendications précédentes, caractérisé en ce que le bras (17) du capteur (9) est disposé sur le premier axe d'un goniomètre double (19) et que la pièce de support principal (26) est disposée sur le deuxième axe de ce dernier.

10. Dispositif selon la revendication 1, caractérisé en ce que les colonnes de levage (71 à 76) comprennent, soit exclusivement, soit en combinaison avec un moteur à vis, un système hydraulique de micropositionnement ou un moteur piézo.
